# EUROPÄISCHE PATENTSCHRIFT

(11) **EP 0 358 022 B1**
(45) Veröffentlichungstag und Bekanntmachung des Hinweises auf die Patenterteilung: **02.03.1994**
(21) Anmeldenummer: 89115328.0
(22) Anmeldetag: 19.08.1989
(51) Int. Cl.: C07F 9/38

(54) **Verfahren zur kontinuierlichen Herstellung von 2-Phosphonobutan-1,2,4-tricarbonsäure und ihrer Alkalimetallsalze**
Process for the continuous preparation of 2-phosphonobutane-1,2,4-tricarboxylic acid and its alkali salts
Procédé de préparation en continu de l'acide phosphono-2 butane tricarboxylique-1,2,4 et de ses sels alcalins

(30) Priorität: 03.09.1988 DE 3829961
(43) Veröffentlichungstag der Anmeldung: 14.03.1990
(73) Patentinhaber: BAYER AG, 51368 Leverkusen (DE)
(72) Erfinder: Kleinstück, Roland, Dr., D-5060 Bergisch-Gladbach 2 (DE); Lensch, Cornelia, Dr., D-5632 Wermelskirchen 2 (DE); Immenkeppel, Michael, Dr., D-5300 Bonn 1 (DE); Block, Hans-Dieter, Dr., D-5090 Leverkusen 3 (DE); Odenbach, Herbert, Dr., D-5090 Leverkusen 1 (DE)

(56) Entgegenhaltungen:
- DE-A- 2 061 838
- DE-A- 2 141 982
- FR-A- 2 253 527

## Beschreibung

Die Erfindung betrifft ein verbessertes Verfahren zur Herstellung von 2-Phosphonobutan-1,2,4-tricarbonsäure (PBTC) und ihrer Alkalimetallsalze in einem kontinuierlichen Prozeß, bei dem zunächst Dialkylphosphit, bevorzugt Dimethyl- oder Diethylphosphit und Ethen-1,2-dicarbonsäuredialkylester, insbesondere die Dimethyl- bzw. Diethylester von Maleinsäure und/oder Fumarsäure, in Gegenwart eines basischen Katalysators zu Phosphonobernsteinsäuretetraalkylester umgesetzt werden, daraufhin der so erhaltene Ester ohne weitere Aufarbeitung mit Acrylsäurealkylester, bevorzugt Acrylsäuremethyl- oder Acrylsäureethylester, in Gegenwart eines alkalischen Katalysators zur Reaktion gebracht wird und das so gewonnene Reaktionsprodukt ohne weitere Aufarbeitung zu PBTC oder ihren Alkalimetallsalzen verseift wird.

Bereits früher wurde gefunden, daß aus Dialkylphosphit und Maleinsäure- bzw. Fumarsäuredialkylester in Gegenwart von Alkalialkoholaten in einer Additionsreaktion vom Michael-Typ Phosphonobernsteinsäuretetraalkylester darstellbar sind (A.N. Pudovik, Izv. Akad. Nauk. SSSR Otdel Khim Nauk 1952, S. 821-824). Die so hergestellten Tetramethyl- bzw. Tetraethylester der Phophonobernsteinsäure werden durch Destillation gereinigt und in Ausbeuten von ca. 80 % erhalten.

In FR-A-2 253 527 werden Phosphonoalkancarbonsäuren hergestellt, indem man z.B. Dialkylphosphit mit ungesättigten Carbonsäureestern in Gegenwart von Natriumalkoholaten umsetzt und dann den entstandenen Ester sauer verseift.

Die DE-OS 2 061 838 beschreibt die Synthese von PBTC durch Reaktion äquimolarer Mengen Phosphonobernsteinsäuretetramethylester mit Acrylsäuremethylester bzw. Acrylnitril in Gegenwart von 100-150 mmol/mol Natriummethanolat als Katalysator und anschließende Hydrolyse mit verdünnter Salzsäure. Bei diesem Verfahren wird destillierter Phosphonobernsteinsäuretetramethylester eingesetzt und das Zwischenprodukt 2-Phosphonobutan-1,2,4-tricarbonsäurepentamethylester bzw. 2-Dimethylphophono-4-nitrilo-butan-1,2-dicarbonsäuredimethylester vor der Verseifung von flüchtigen Nebenprodukten im Vakuum bei 80-90°C befreit.

Auch andere, den Stand der Technik bildende Verseifungsverfahren von 2-Phosphonobutan-1,2,4-tricarbonsäurepentamethylester wie die Hydrolyse ohne Zusatz von systemfremden Verseifungskatalysatoren (DO-OS 2 229 087), sowie die Hydrolyse unter Druck (DE-OS 2 745 982) gehen von vorgereinigten Edukten aus.

Gewisse Nachteile bei den bisherigen Darstellungsmethoden von 2-Phosphonobutan-1,2,4-tricarbonsäure bestehen nun darin, daß eine Reinigung des Phosphonobernsteinsäuretetraalkylesters durch Destillation notwendig ist. Ebenso ist es nach den bisher bekannten Verfahren notwendig, vor der Verseifung von 2-Phosphonobutan-1,2,4-tricarbonsäurepentaalkylester zur Reinigung des Produktes die leicht flüchtigen Substanzen unter Vakuum bei einer Sumpftemperatur bis zu 100°C abzudestillieren.

Der Erfindung liegt die Aufgabe zugrunde, ein kontinuierliches Verfahren zu entwickeln, in dem die oben beschriebenen Nachteile vermieden werden.

Gegenstand der Erfindung ist ein Verfahren zur Herstellung von 2-Phosphonobutan-1,2,4-tricarbonsäure oder ihrer Alkalimetallsalze, welches dadurch gekennzeichnet ist, daß man kontinuierlich Phosphorigsäuredialkylester mit Ethen-1,2-dicarbonsäuredialkylester, worin die Alkylgruppen in den beiden Stoffgruppen jeweils unabhängig voneinander Methyl- oder Ethylgruppen sind, im Molverhältnis 1 : 1 bis 1 : 1,1 bevorzugt 1 ,03 bis 1 : 1,07 in Gegenwart von Alkalimetallmethylat oder -ethylat bei Temperaturen von 0 bis 100 °C zu Phosphonobernsteinsäuretetraalkylester umsetzt und das so erhaltene Reaktionsprodukt ohne Aufarbeitungs- oder Reinigungs-Schritt durch Zugabe von 0,9-1,1 Mol, bevorzugt 1-1,07 Mol, Acrylsäurealkylester, worin die Alkylgruppen Methyl- oder Ethylgruppen sind, in Gegenwart von Alkalimetallmethylat oder -ethylat als Katalysator und Zusatz von 0,4-1,3 Mol, bevorzugt 0,6 Mol Methanol oder Ethanol, bezogen auf 1 Mol herzustellende PBTC als Lösungs- oder Verdünnungsmittel bei Temperaturen von -20 bis 80 °C zum 2-Phosphonobutan-1,2,4-tricarbonsäurepentaalkylester, worin die Alkylgruppen Methyl- oder Ethylgruppen sind, umsetzt und das Reaktionsprodukt ohne Weitere Aufarbeitung einer sauren Hydrolyse, vorzugsweise einer durch PBTC katalysierten Hydrolyse bei 100 bis 150 °C, vorzugsweise 105 - 130 °C, unterwirft.

Überraschenderweise zeichnet sich das so erhaltene Produkt PBTC durch eine Reinheit aus, die dem Produkt aus der bisher bekannten Verfahrensweise mit destillativer Reinigung in den Zwischenstufen nicht nachsteht. Nebenprodukte werden überraschenderweise überwiegend bei der Verseifung mit Wasserdampf zusammen mit dem Alkohol gasförmig ausgetragen. Der mit dem Wasserdampf ausgetriebene Alkohol bzw. das Alkoholgemisch kann aus dem wäßrigen, alkalisch gestellten, mit wasserdampfflüchtigen Substanzen verunreinigtem Kondensat destillativ in hochreiner Form zurückgewonnen werden.

Das erfindungsgemäße Verfahren ermöglicht es, in technisch einfacher Weise ohne Bildung unerwünschter Nebenprodukte und ohne Einsatz überschüssiger Reaktionspartner oder wieder zu entfernender Hilfsstoffe die gewünschten Produkte PBTC oder ihre Alkalimetallsalze in guten Ausbeuten zu erhalten, Das erfindungsgemäße Verfahren ermöglicht durch Wegfall der bisher notwendigen Destillationsschritte zwischen den einzelnen Synthesestufen eine energiesparendere und durch Einsparung der dazu notwendigen Apparate eine technisch einfachere Synthese von PBTC.

Es steht damit ein Verfahren, zur Verfügung, das es erlaubt PBTC bzw. ihre Salze, die heute schon eine sehr verbreitete Anwendung gefunden haben (z.B. als Stein- und Korrosionsinhibitor bei der Kühlwasserbehandlung, als Inkristationsinhibitor in Industriereinigern, als Sequestrier- und Dispergiermittel) auf einfache Weise und in sehr reiner Form herzustellen.

Das erfindungsgemäße Verfahren soll anhand des folgenden Beispiels näher erläutert werden.

### Beispiel

In einer kontinuierlichen Anlage werden pro Stunde 9.52 kg Maleinsäuredimethylester (66,11 Mol), 5.52 kg Dimethylphosphit (62,55 Mol) und 88 g 25 Gew.-%ige methanolische Natriummethylatlösung (0,65 Mol %) als Katalysator in ein gerührtes Reaktionsgefäß eingeleitet. Die Temperatur im Reaktor beträgt 40°C. Nach einer mittleren Verweilzeit von ca. 220 min. läuft das Reaktionsgemisch in ein zweites Reaktionsgefäß.

Im zweiten Reaktor werden dem Zulauf aus Reaktor I pro Stunde 5,68 kg Acrylsäuremethylester (66,05 Mol), 244 g 25 Gew.-%ige methanolische Natriummethylatlösung (1,81 Mol %) und 1,2 kg Methanol (37,6 Mol) zudosiert. Die Reaktionstemperatur beträgt 5°C, die mittlere Verweilzeit 220 min. Das über einen Überlauf den Reaktor verlassende Reaktionsprodukt hat folgende Zusammensetzung:

### (Gaschromatographische Analyse):

17,0 Flächen-% Methanol
0,7 Flächen-% Acrylsäuremethylester
1,3 Flächen-% Methanphosphonsäuredimethylester
0,8 Flächen-% Methoxybernsteinsäuremethylester
1,9 Flächen-% Phosphonobernsteinsäuretetramethylester
0,4 Flächen-% 2-Phosphonopropan-1,2-dicarbonsäure tetramethylester
73,8 Flächen-% 2-Phosphonobutan-1,2,4-tricarbonsäurepentamethylester
Der aus dem Reaktor II ablaufende Rohester wird bei 100-130°C unter Eigenkatalyse innerhalb von 12 Stunden vollständig verseift. Pro Stunde fallen 32,8 kg 50 Gew.-%ige wäßrige Lösung folgender Zusammensetzung an (³¹PNMR-Spektrum):
0,2 Mol% Phosphorsäure
3,7 Mol% Phosphonobernsteinsäure
4,3 Mol% Phosphonobutantricarbonsäuremonomethylester
87,0 Mol% Phosphonobutantricarbonsäure
0,7 Mol% Phosphonopropionsäure

## Patentansprüche

1. Verfahren zur kontinuierlichen Herstellung von 2-Phosphonobutan-1,2,4-tricarbonsäure (PBTC) in Form der freien Säure oder ihrer Alkalimetallsalze mit vollständigem oder teilweisem Ersatz der Säureprotonen durch Alkalimetallionen aus Dialkylphosphit, Ethen-1,2-dicarbonsäuredialkylester und Acrylsäurealkylester, dadurch gekennzeichnet, daß man zunächst durch Reaktion von Dialkylphosphit und Ethen-1,2-dicarbonsäuredialkylester im Molverhältnis 1 : 1 bis 1 : 1,1, bevorzugt 1 : 1,03 bis 1 : 1,07, in Gegenwart eines alkalischen Katalysators gegebenenfalls unter Zusatz eines Lösungs- oder Verdünnungsmittels bei Temperaturen von 0 bis 100 °C Phosphonobernsteinsäuretetraalkylester herstellt, diesen dann ohne zwischengeschaltete Reinigungs- oder Konzentrierungsoperationen durch Zugabe von 0,9-1,1 Mol, bevorzugt 1-1,07 Mol, Acrylsäurealkylester in Gegenwart eines alkalischen Katalysators gegebenenfalls unter Zusatz von 0,4-1,3 Mol, bevorzugt 0,6 Mol, bezogen auf 1 Mol herzustellende PBTC, eines Lösungs- oder Verdunnungsmittels bei Temperaturen von -20 bis 80 °C zu 2-Phosphonobutan-1,2,4-tricarbonsäurepentaalkylester umsetzt und diesen dann ohne zwischengeschaltete Reinigungs- oder Konzentrierungsoperationen einer sauren Hydrolyse bei 100-150 °C unterwirft.

2. Verfahren nach Anspruch 1, dadurch gekennzeichnet, daß die Alkylester gleich oder unabhängig voneinander Methyl- und Ethylester sind.

3. Verfahren nach den Ansprüchen 1 bis 2, dadurch gekennzeichnet, daß die alkalischen Katalysatoren Alkalimethanolat oder Alkaliethanolat sind.

4. Verfahren nach den Ansprüchen 1 bis 3, dadurch gekennzeichnet, daß die Lösungs- oder Verdünnungsmittel Methanol und/oder Ethanol sind.

5. Verfahren nach den Ansprüchen 1 bis 4, dadurch gekennzeichnet, daß die saure Hydrolyse eigenkatalytisch ohne Zusatz von Fremdsäure durchgeführt wird.

## Claims

1. A process for the continuous production of 2-phosphonobutane-1,2,4-tricarboxylic acid (PBTC) in the form of the free acid or alkali metal salts thereof with complete or partial replacement of the acid protons by alkali metal ions from dialkylphosphite, ethene-1,2-dicarboxylic acid dialkyl ester and alkylacrylate, characterized in that phosphonosuccinic acid tetraalkyl ester is first prepared by reaction of dialkylphosphite and ethene-1,2-dicarboxylic acid dialkyl ester in a molar ratio of 1:1 to 1:1.1 and preferably 1:1.03 to 1:1.07 in the presence of an alkaline catalyst, optionally with addition of a solvent or diluent, at temperatures in the range from 0 to 100°C, the phosphonosuccinic acid tetraalkyl ester thus produced is reacted without further purification or concentration by addition of 0.9-1.1 mol and preferably 1-1.07 mol alkylacrylate in the presence of an alkaline catalyst, optionally with addition of 0.4-1.3 mol and preferably 0.6 mol (per mol PBTC to be produced) of a solvent or diluent, at temperatures of from -20 to 80°C to form 2-phosphonobutane-1,2,4-tricarboxylic acid pentaalkyl ester and the pentaalkyl ester thus produced is subjected without intermediate purification or concentration to acidic hydrolysis at a temperature in the range from 100 to 150°C.

2. A process as claimed in claim 1, characterized in that the alkyl esters independently of one another are methyl and ethyl esters.

3. A process as claimed in claims 1 and 2, characterized in that the alkaline catalysts are alkali metal methanolate or alkali metal ethanolate.

4. A process as claimed in claims 1 to 3, characterized in that the solvents or diluents are methanol and/or ethanol.

5. A process as claimed in claims 1 to 4, characterized in that the acidic hydrolysis is self-catalyzed with no addition of foreign acid.

## Revendications

1. Procédé pour la préparation continue de l'acide 2-phosphonobutane-1,2,4-tricarboxylique (PBTC) à l'état d'acide libre ou de sel de métal alcalin avec remplacement complet ou partiel des protons acides par des ions de métaux alcalins, à partir d'un phosphite de dialkyle, d'un éthène-1,2-dicarboxylate de dialkyle et d'un acrylate d'alkyle, caractérisé en ce que l'on prépare d'abord, par réaction d'un phosphite de dialkyle et d'un éthène-1,2-dicarboxylate de dialkyle dans un rapport molaire de 1:1 à 1:1,1, de préférence de 1:1,03 à 1:1,07, en présence d'un catalyseur alcalin, éventuellement avec adjonction d'un solvant ou diluant, à des températures de 0 à 100°C, un phosphonosuccinate de tétraalkyle, on convertit ensuite ce dernier, sans opérations intermédiaires de purification ni de concentration, par addition de 0,9 à 1,1 mol, de préférence de 1 à 0,7 mol d'un acrylate d'alkyle, en présence d'un catalyseur alcalin, éventuellement avec adjonction de 0,4 à 1,3 mol, de préférence de 0,6 mol, pour une mole du PBTC à préparer, d'un solvant ou diluant, à des températures allant de -20 à 80°C, en un 2-phosphonobutane-1,2,4-tricarboxylate de pentaalkyle qu'on soumet, sans opérations intermédiaires de purification ni de concentration, à une hydrolyse acide à des températures de 100 à 150°C.

2. Procédé selon la revendication 1, caractérisé en ce que les esters alkyliques sont identiques ou, indépendamment les uns des autres, des esters méthyliques et éthyliques.

3. Procédé selon les revendications 1 et 2, caractérisé en ce que les catalyseurs alcalins sont des méthanolates ou des éthanolates alcalins.

4. Procédé selon les revendications 1 à 3, caractérisé en ce que les solvants ou diluants consistent en méthanol et/ou éthanol.

5. Procédé selon les revendications 1 à 4, caractérisé en ce que l'hydrolyse acide est réalisée par auto-catalyse, sans addition d'un acide étranger.
